# EUROPÄISCHE PATENTSCHRIFT

(11) **EP 2 853 375 B1**
(45) Veröffentlichungstag und Bekanntmachung des Hinweises auf die Patenterteilung: **26.12.2018**
(21) Anmeldenummer: 13004708.7
(22) Anmeldetag: 27.09.2013
(51) Int. Cl.: B29C 51/46, B29C 51/04

(54) **Verfahren zum Betreiben einer Thermoformmaschine und Thermoformmaschine**
Method for operating a thermoforming machine and thermoforming machine
Procédé de fonctionnement d'une machine de thermoformage et machine de thermoformage

(43) Veröffentlichungstag der Anmeldung: 01.04.2015
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Kross, Ulrich

(56) Entgegenhaltungen:
- EP-A1- 1 361 036
- DE-A1-102008 005 625
- DATABASE WPI Week 201210 Thomson Scientific, London, GB; AN 2012-B36678 XP002721265, -& CN 202 106 541 U (HEBEI CHINA UST AUTOMOTIVE PLASTICS CORP) 11. Januar 2012 (2012-01-11)
- G Dr Gruenwald: "Thermoforming: A Plastics Processing Guide, Second Edition - Geza Gruenwald - Google Books", , 31 December 1998 (1998-12-31), pages 65-66, XP055267874, Retrieved from the Internet: URL:https://books.google.de/books?id=ESuVu du6h_YC&pg=PA65&lpg=PA65&dq=air+pressure+l oss+in+pipe+thermoforming&source=bl&ots=rT 1G9DSViB&sig=x8LKhPRzF1RywSmyiU3zyt_0WqY&h l=en&sa=X&ved=0ahUKEwj7yNCPvKDMAhVHOBoKHWc CDHoQ6AEIHzAB#v=onepage&q=air%20pressure%2 0loss%20in%20pipe%20thermoforming&f=false [retrieved on 2016-04-22]

## Beschreibung

Die Erfindung betrifft ein Verfahren zum Betreiben einer Thermoformmaschine zum Formen von Artikeln aus Kunststoff, wobei die Thermoformmaschine ein mindestens zweiteiliges Werkzeug umfasst sowie mindestens einen Formluft-Tank, in dem Formluft unter einem Druck gehalten wird, wobei zum Ausformen der Artikel Formluft aus dem Formluft-Tank ins Werkzeug eingegeben wird. Des weiteren betrifft die Erfindung eine Thermoformmaschine.

Ein gattungsgemäßes Verfahren ist bekannt. Es wird auf die DE 102 20 700 B4, auf die DE 10 2008 013 264 B3, auf die DE 103 26 670 B3, auf die DE 102 20 701 A1, auf die DE 197 26 768 C2 und auf die DE 43 40 449 C2 hingewiesen, die den Einsatz von Formluft zur Ausformung der Kunststoffartikel in einer Thermoformmaschine beschreiben. Der Einsatz von Formluft erlaubt hiernach jeweils vorteilhaft die Reduzierung der Formzeit der Artikel, so dass die entsprechenden Thermoformverfahren wirtschaftlicher arbeiten. Nachteilig ist bei den vorbekannten Lösungen, dass der Aufwand für eine prozessstabile Arbeitsweise mitunter hoch ist, was entsprechende Kosten hervorruft.

Auch die EP 1 103 365 A1, die DE 201 16 922 U1, die EP 2 052 843 A2 und die EP 1 702 742 B1 beschäftigen sich mit dem Ziel, die Formzeit für die herzustellenden Kunststoffartikel zu reduzieren. Hierbei wird teilweise auch auf die Reduzierung der benötigten Luftmenge gesetzt (Luftspartechnik), deren Kern es ist, einen zum Oberwerkzeug abgedichteten Vorstrecker einzusetzen. Hierdurch wird das zu befüllende Volumen der Druckkammer reduziert und somit gleichermaßen auch der Druckluftverbrauch.

Nachteilig ist bei dieser Technik indes der Verschleiß der zum Einsatz benötigten Dichtung. Es ergibt sich nachteilig Schmutz durch Abrieb an der Dichtung und eine hohe Formdruckbelastung der Vorstreckkomponenten sowie deren Antrieb. Dies wirkt sich negativ auf die Maschinenverfügbarkeit aus.

Der genannte Abrieb ist auch deshalb sehr negativ, weil dieser Zugang zu den Öffnungen der hergestellten Artikel, d. h. zu den Becheröffnungen, hat. Der nachteilige Effekt ergibt sich daraus, dass es sich hier oft um Lebensmittelverpackungen handelt, was den Eintritt von Verschmutzungen besonders problematisch macht.

Die Gestaltung der Vorstreckdichtung zeigt sich wegen hoher Anforderungen an die Dichtheit, die Reibung und an die Wärmeentwicklung in dem präzise gekühlten Werkzeug als problematisch. Das ist neben der Geometrie der Formteile ein Grund dafür, warum dieses Verfahren zumeist nur bei runden Bechern angewendet wird (die Vorstrecker sind dann ebenfalls rund).

Das gattungsgemäße Thermoformverfahren ist ferner deshalb besonders anspruchsvoll, weil häufig teilkristalline Materialien, wie Polypropylen, zu verarbeiten sind. Hier ist der für die Verformung nutzbare Temperaturbereich mit nur ca. 5° C sehr klein. Derartiges Material ist beim Thermoformen sehr verbreitet. Abweichungen von dem vorgegebenen Temperaturbereich führen zu Störungen oder zumindest zu Qualitätseinbußen. Die Zeit, bis die zu verarbeitende Kunststoff-Folie an der Wandung der Werkzeugform anliegt, muss demnach möglichst kurz gehalten werden, um eine partielle Auskühlung zu vermeiden.

Demgemäß sind schnelle Vorstrecksysteme erforderlich sowie speziell das schnelle Befüllen und Entlüften der Werkzeugform mit Formluft (Druckluft) über Ventile. Daraus ergibt sich, dass der Formluftdruck zumeist hoch eingestellt wird, damit zur Verformung geeignete Formluftkräfte schnell in der Form wirken können. Ist die vorgesehene Kühlzeit abgelaufen, wird die Formluftzufuhr über ein Ventil beendet und zeitgleich wird die Formluft im Werkzeug über Schalldämpfer entlüftet. Dabei sind Mehrfachversorgungen bzw. -ventile gebräuchlich, ebenso wie ausreichende Formluftbevorratung ortsnah am Werkzeug mittels Tanks.

Durch die EP 1 361 036 A1 ist ein beschleunigter Druckaufbau bekannt geworden, und zwar durch Reduzierung des Luftverbrauchs in den Formluftleitungen. Die Zuführung der Formluft bis zu einem Formluftventil, von dem ausgebildet als druckbetätigbares Ventil in jedem Streckhelfer eines angeordnet ist, bleibt unter Druck, wobei ein schnellerer Druckaufbau im Formnest bzw. Werkzeug erfolgen kann, da die Luft schon unter vollem Druck am Streckhelfer ansteht. Der Versorgungsdruck, zugeführt von beispielsweise einem Tank, und der Nutzdruck im Werkzeug stimmen überein und sind gleich groß.

Aus der DE 10 2008 005 625 A1 ist es bekannt eine Thermoformmaschine mit Sensoren zum Messen von Eigenschaften geformter Produkte oder von Umgebungsfaktoren wie Temperatur, Feuchtigkeit und Druck auszurüsten. Dabei sind verschiedenste Sensoren direkt am Streckhelfer / Vordehner angebracht.

Auf einem völlig anderen Gebiet der Technik ist es aus der CN 202106541 U bekannt, am Dampfauslass eines Dampferzeugers zur Druckkontrolle ein Proportional-Ventil vorzusehen.

Durch die Veröffentlichung "Gruenwald, Thermoforming: A Plastic Processing Guide, 31. Dezember 1998, Seiten 65/66" werden zur Herstellung von Artikeln aus Kunststoff zwei ohne Vorstrecker arbeitende Verfahren gegenüber gestellt, nämlich einerseits eine Druck-Umformung und andererseits eine Vakuum-Umformung. Es wird beschrieben, dass beim Vakuumbetrieb mit 10 psi die Druckverluste bis 50 % betragen können, während sie bei der Druck-Umformung mit 100 psi nur etwa 5 % betragen, so dass der im Werkzeug anstehende Formdruck aufgrund dieser Verluste entsprechend geringer ist als die von einem Tank bereitgestellte bzw. durchgeführte Druckluft. Zur Entlüftung des Formnestes sind im Werkzeug Bohrungen vorgesehen.

Der Erfindung liegt im Lichte der vorgenannten Nachteile der bekannten Lösungen die **Aufgabe** zugrunde, ein verbessertes Thermoformverfahren der gattungsgemäßen Art zu schaffen und eine entsprechende Thermoformmaschine bereit zu stellen. Die Formzeit soll dabei möglichst kurz sein, so dass eine möglichst hohe Ausstoßleistung erreichbar ist. Ferner soll durch einen geringeren Formluftbedarf eine entsprechende Energieeinsparung möglich sein.

Insbesondere soll dabei das Verfahren so fortgebildet werden, dass die Vorteile der Luftspartechnik beibehalten werden, d. h. geringe Füll- und Entlüftungzeiten für die Formluft, hohe Ausstoßleistungen, geringer Formluftbedarf und geringer Energieverbrauch. Ferner sollen die Nachteile der Luftspartechnik vermieden werden, wie insbesondere verschleißende Vorstreckdichtungen, eine reduzierte Maschinenverfügbarkeit, eine mangelnde Hygiene, hochbelastete Werkzeugkomponenten durch Formdruckkräfte, hochbelastete Maschinen und Antriebskomponenten durch Formdruckkräfte, ein hoher Aufwand bei der Werkzeug- und Maschinenausführung, hohe Kosten und die Anwendung nur für runde Formteile.

Diese Aufgabe wird durch die in den kennzeichnenden Teilen der Ansprüche 1 und 6 angegebenen Merkmale gelöst.

Der Druck der Formluft im Werkzeug oder vor dem Werkzeug wird dabei bevorzugt gemessen, wobei in Abhängigkeit des gemessenen Drucks mindestens ein Ventil von einer Steuerungs- oder Regelungseinrichtung so betätigt wird, dass sich ein vorgegebener Druck im Werkzeug einstellt.

Der Formluft-Tank kann dabei über eine Speiseleitung mit Druckluft versorgt werden, wobei die Speiseleitung vorzugsweise Bestandteil einer Druckluftversorgungsanlage für ein Gebäude oder Gebäudeteil ist. Im Bereich der Speiseleitung und vor dem Formluft-Tank kann ein Druckminderer angeordnet sein, mit dem der Druck im Formluft-Tank auf einem definierten Wert gehalten wird.

Der Druck der Formluft im Werkzeug wird dabei bevorzugt stets auf einem Niveau gehalten, das maximal 75 % des Drucks im Formluft-Tank, vorzugsweise maximal 60 % des Drucks im Formluft-Tank, beträgt.

Die vorgeschlagene Thermoformmaschine zum Formen von Artikeln aus Kunststoff, wobei diese ein mindestens zweiteiliges Werkzeug sowie einen Formluft-Tank umfasst, in dem Formluft unter einem Druck gehalten wird, zeichnet sich dadurch aus, dass zwei 3/2-Wege-Ventile vorhanden sind, wobei ein erstes Ventil in der Gasleitung angeordnet ist, die sich zwischen dem Formluft-Tank und dem Werkzeug erstreckt, und wobei ein zweites Ventil zwischen einer vom ersten Ventil kommenden Gasleitung und der Umgebung angeordnet ist. Diese 3/2-Wege-Ventile sind marktüblich und strömungsoptimiert, sowie mit reproduzierbaren Schaltzeiten ausgestattet.

Ebenso ist neben der Kombination der 3/2-Wege-Ventile der Einsatz eines 5/3-Wege-Ventils oder eines Proportionalventils möglich.

Im Werkzeug ist bevorzugt mindestens ein mechanischer Vorstrecker angeordnet.

Gemäß der Erfindung wird die Formluft in entsprechenden Tanks ortsnah am Werkzeug bevorratet und mit dem vorhandenen Werksdruck der Druckluftversorgungsleitungen gespeist. Um einen definierten Druck im Formluft-Tank zu gewährleisten, empfiehlt es sich, die Speisung über einen Druckminderer vorzunehmen. So werden Netzschwankungen kompensiert.

In der Zeichnung ist ein Ausführungsbeispiel der Erfindung dargestellt. Es zeigen:
- Fig. 1: schematisch eine Thermoformmaschine, die mit einem Formluft-Tank verbunden ist;
- Fig. 2: einen Teil des Werkzeugs der Thermoformmaschine mit einem Vorstrecker; und
- Fig. 3: schematisch den Verlauf des Drucks der ins Werkzeug eingegebenen Formluft als Funktion der Zeit.

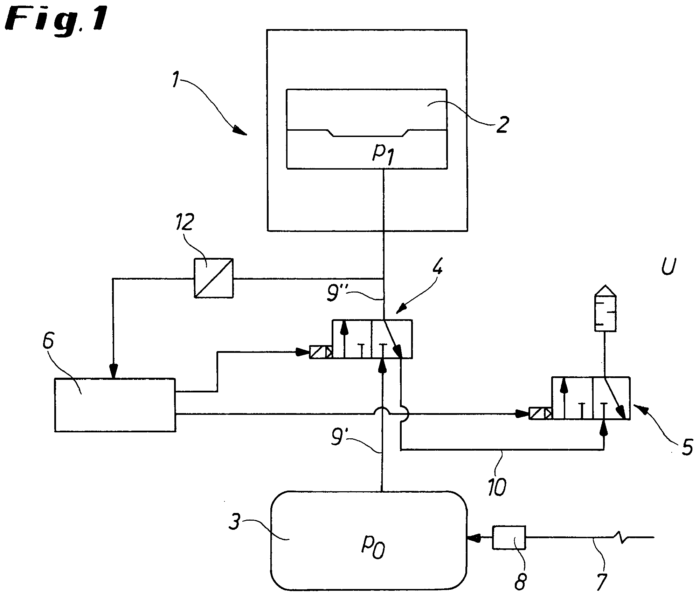

In Fig. 1 ist schematisch eine Thermoformmaschine 1 skizziert, die ein zweiteiliges Werkzeug 2 aufweist. Wie eingangs beschrieben, wird bei der Herstellung von Artikeln im Thermoformprozess Formluft eingesetzt, die in einem Formluft-Tank 3 bevorratet wird.

### Der Thermoform-Prozess sieht prinzipiell folgende Schritte vor:

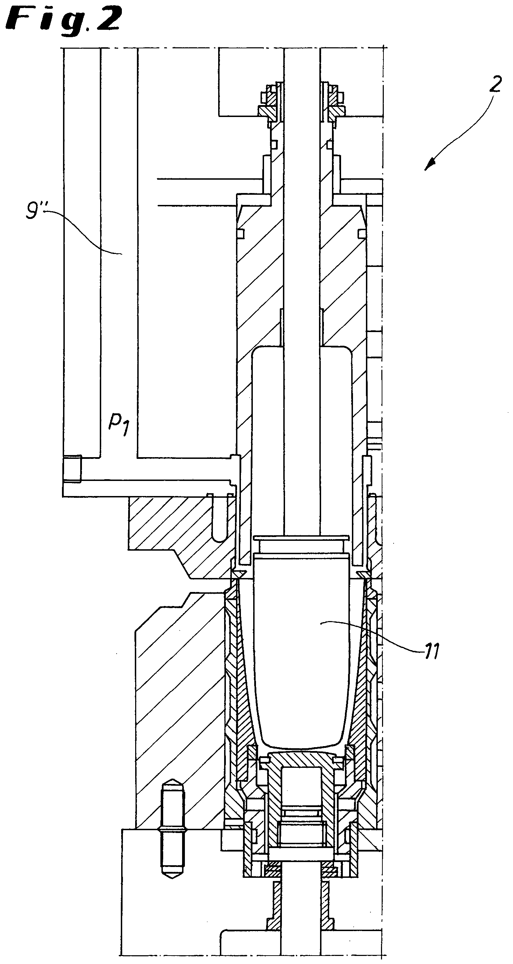

Zunächst wird ein Folienabschnitt aufgeheizt. Dieser wird in die Formstation, d. h. in den Werkzeugbereich transportiert. Anschließend wird das Werkzeug 2 geschossen. Hierbei klemmt ein Niederhalter die Folie ein. Die Vorstrecker - s. hierzu Position 11 in Fig. 2 - fahren in die Folie ein. Die Formkavität wird dann mit Formluft aus dem Formluft-Tank 3 gefüllt. Die Folie wird an die Formwandung gedrückt und kühlt aus; gleichzeitig fahren die Vorstrecker nach oben. Das Werkzeug 2 kann anschließend entlüftet und das fertige Formteil nach der Werkzeugöffnung entnommen werden.

Die Formluft wird im Formluft-Tank unter einem Druck p₀ gehalten. Dieser Druck beträgt typischerweise zwischen 6 und 8 bar und sollte möglichst konstant gehalten werden. Die Befüllung des Formluft-Tanks 3 erfolgt über das Druckluft-Leitungsnetz des Gebäudes, in dem die Thermoformmaschine 1 aufgestellt ist. Angedeutet ist eine Speiseleitung 7, mit der Luft aus dem Druckluftnetz in den Formluft-Tank 3 eingegeben wird. Dabei sorgt ein Druckminderer 8 für einen gleichbleibenden Speisedruck.

Im Werkzeug 2 wird ein Formluft-Druck p₁ angestrebt, der wesentlich unter dem Formluft-Druck p₀ im Formluft-Tank 3 liegt. Typisch sind 2,5 bis 4 bar, die für den vorliegenden Zweck absolut ausreichend sind. Das Eingeben und Ablassen der Formluft in das und aus dem Werkzeug 2 wird dabei von zwei Ventilen 4 und 5 gesteuert.

Das erste Ventil 4 liegt in einer Gasleitung, die vom Formluft-Tank 3 ins Werkzeug 2 führt und aus den beiden Teilen 9' und 9" besteht.

Das zweite Ventil 5 ist über eine Gasleitung 10 mit dem ersten Ventil 4 fluidisch verbunden und mündet seinerseits in die Umgebung U (wobei noch ein Schalldämpfer vor dem Luftaustritt in die Umgebung vorgesehen ist).

Den Druck in der Gasleitung 9" wird von einem Drucksensor 12 gemessen, der mit einer Steuerungs- oder Regelungseinrichtung 6 verbunden ist. Diese steuert die Ventile 4 und 5.

In Abhängigkeit der Ansteuerung der Ventile kann zunächst erreicht werden, dass trotz des höheren Drucks p₀ im Formluft-Tank 3 im Werkzeug 2 nur ein geringerer Druck p₁ aufrecht erhalten wird. Hierzu steuert die Steuerungs- oder Regelungseinrichtung 6 das Ventil 4 in Abhängigkeit des vom Drucksensor 12 ermittelten Drucks entsprechend an.

Die Ansteuerung der Ventile 4 und 5 hat darüber hinaus die Folge, dass die folgenden tabellarisch angegebenen Modi gefahren werden können:

| Ventil 4 | Ventil 5 | Funktion |
|---|---|---|
| offen | geschlossen | Werkzeug füllen |
| geschlossen | geschlossen | Formdruck halten |
| geschlossen | offen | Werkzeug entlüften |

Der Druck im Formluft-Tank p₀ ist also stets größer als der Formluft-Druck p₁ im Werkzeug 2. Das Werkzeug bzw. die Speiseleitung ist mit dem Drucksensor 12 ausgestattet. Mittels der Maschinensteuerung 6 wird beim Erreichen des voreingestellten Formdrucks die Formluftzufuhr gesperrt. Während der voreingestellten Kühlzeit verbleibt dieser Druck in der Werkzeugform, um anschließend entlüftet zu werden. Der Formprozess ist dann beendet, das Werkzeug öffnet nach einer voreingestellten Entlüftungszeit.

Während der Formluft-Tank 3 mit dem üblichen Werksdruck (meist zwischen 6 und 8 bar) gespeist wird, wird der Werkzeug-Druck p₁ über die Steuerung parametriert. Die Höhe des Drucks p₁ liegt meist deutlich unter dem Druck p₀. Wie erwähnt gilt, dass ein Druck zwischen 2,5 und 4 bar meist ausreichend ist. Entscheidend für die Ausformung ist nur, dass eine Mindestdruckgröße möglichst schnell in die Form gebracht wird, weil dann noch die Verformbarkeit der Folie mit annähernd optimalem Temperaturprofil gegeben ist.

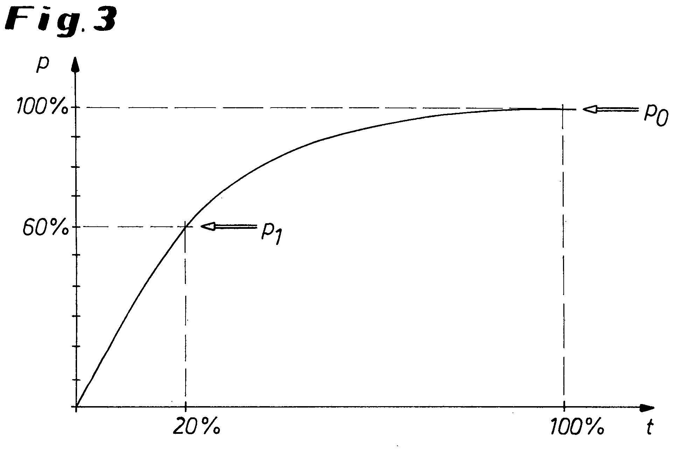

Dies wird durch die Druckdifferenz zwischen Formluft-Tank und Werkzeug erreicht. Da das Befüllen nach einer Exponential-Funktion verläuft, wird ca. 65 % des Tankdruckes bereits nach ca. 20 % der Zeit für das - nach dem Stand der Technik üblichen - Befüllen mit Tankdruck erreicht. Dies ist in Fig. 3 schematisch dargestellt.

Aufgrund des im Verhältnis zum Tank-Drucks p₀ kleinen Formdrucks p₁ ist die Entlüftungszeit kürzer, da nur ein kleineres Druckpotential in die Atmosphäre, d. h. in die Umgebung U, entlüftet werden muss.

### Folgendes Beispiel sei angeführt:

Bei den vorbekannten Verfahren ist vorgesehen, dass das Werkzeug mit dem Druck im Formluft-Tank befüllt wird. Die hier eingesetzten Ventile haben generell zwei mögliche Stellungen: Zum einen kann in der einen Stellung das Befüllen des Werkzeugs erfolgen, wobei Formluft-Tank und Werkzeug miteinander verbunden werden; zum anderen ist in der anderen Stellung der Tank geschlossen und das Werkzeug geöffnet, d. h. es kann entlüftet werden. Demgemäß liegt beispielsweise bei einem Tankdruck von 6 bar auch ein Formdruck von 6 bar an. Demgemäß muss dann auch der Druck von 6 bar entlüftet werden.

Die vorliegende Erfindung erlaubt und sieht indes vor, das Werkzeug nur mit einem anteiligen Tankdruck zu füllen, d. h. nur mit einem Teil des Druckniveaus, wie es im Formluft-Tank anliegt. Hierbei sind mehrfach strömungsoptimierte Werkzeugeinlässe wie ggf. mehrere Tanks vorgesehen.

Das Ventil bzw. die Ventile bzw. Ventilkombinationen haben drei mögliche Funktions-Stellungen (s. obige Tabelle):
Zunächst ist es in einer ersten Stellung möglich, das Werkzeug zu befüllen, wozu der Formluft-Tank und das Werkzeug fluidisch miteinander verbunden werden.

Dann ist es in einer zweiten Stellung möglich, die Anbindung an den Tank zu schließen und das Werkzeug geschlossen zu halten. In dieser Stellung wird also der Formdruck im Werkzeug aufrechterhalten.

In einer dritten Stellung ist es schließlich möglich, bei geschlossenem Tank das Werkzeug zu öffnen, d. h. den Druck im Werkzeug zu entlüften.

Liegt im Tank beispielsweise ein Druck von 8 bar vor, kann mit einem Werkzeugdruck von beispielsweise nur 4 bar gearbeitet werden; somit muss auch nur dieser geringere Druck entlüftet werden.

Für den Thermoformprozess stehen beispielsweise zwei alternative Steuerungsmöglichkeiten zur Verfügung. Erstens ist es in bevorzugter, für den Anwender einfacher Weise möglich, bei Erreichen des gewünschten bzw. benötigten Drucks durch entsprechende Ventilbetätigung den Druck nicht über das gewünschte Niveau ansteigen zu lassen. Es wird somit der gewünschte Werkzeug-Formdruck parametriert.

Zweitens kann das Umschalten zwischen Befüllen und Halten nach einer definierten vorgegebenen Zeit erfolgen, die empirisch und artikelspezifisch ermittelt werden kann. Möglich ist es dabei auch, dass der gewünschte bzw. benötigte Druck der Druckwerterfassung mit dem Zeitglied abgeglichen wird. Hierbei wird die Befüllzeit parametriert, was sich dann empfiehlt, wenn der wie vorstehend beschrieben parametrierte Druck nicht mit dem Druck im Formwerkzeug übereinstimmen sollte.

### Bezugszeichenliste:

- 1: Thermoformmaschine
- 2: Werkzeug
- 3: Formluft-Tank
- 4: erstes Ventil
- 5: zweites Ventil
- 6: Steuerungs- oder Regelungseinrichtung
- 7: Speiseleitung für den Formluft-Tank
- 8: Druckminderer
- 9': Teil der Gasleitung zwischen Formluft-Tank und Werkzeug
- 9": Teil der Gasleitung zwischen Formluft-Tank und Werkzeug
- 10: Gasleitung
- 11: Vorstrecker
- 12: Drucksensor

- U: Umgebung

- p₀: Druck im Formluft-Tank
- p₁: Druck der Formluft im Werkzeug

## Patentansprüche

1. Verfahren zum Betreiben einer Thermoformmaschine (1) zum Formen von Artikeln aus Kunststoff, wobei die Thermoformmaschine (1) ein mindestens zweiteiliges Werkzeug (2) umfasst sowie mindestens einen Formluft-Tank (3), in dem Formluft unter einem Druck (p₀) gehalten wird, wobei zum Ausformen der Artikel Formluft aus dem Formluft-Tank (3) in gesteuerter oder geregelter Weise ins Werkzeug (2) eingegeben wird,
**dadurch gekennzeichnet, dass**
die Formluft so in das Werkzeug (2) eingegeben wird, dass der Druck der Formluft (p₁) im Werkzeug (2) unter dem Druck (p₀) im Formluft-Tank (3) liegt, wobei in einer Gasleitung (9', 9") zwischen dem Formluft-Tank (3) und dem Werkzeug (2) mindestens ein Ventil (4, 5) und ein mit einer Steuerungs- oder Regeleinrichtung (6) verbundener Drucksensor (12) angeordnet sind, wobei das mindestens eine, von der Steuerungs- oder Regeleinrichtung (6) gesteuerte Ventil (4, 5) drei unterschiedliche Modi erlaubt, nämlich
- zum Befüllen des Werkzeugs (2) mit Formluft aus dem Formluft-Tank (3) die Herstellung einer fluidischen Verbindung zwischen dem Formluft-Tank (3) und dem Werkzeug (2);
- zum Halten des Drucks der Formluft im Werkzeug (2) eine fluidische Unterbrechung der ins Werkzeug (2) führenden Gasleitung (9");
- zum Entlüften des Drucks der Formluft aus dem Werkzeug (2) die Herstellung einer fluidischen Verbindung der ins Werkzeug (2) führenden Gasleitung (9") zur Umgebung, wobei gleichzeitig die vom Formluft-Tank (3) kommende Gasleitung (9') fluidisch unterbrochen ist.

2. Verfahren nach Anspruch 1, **dadurch gekennzeichnet, dass** der Druck der Formluft (p₁) im Werkzeug (2) oder vor dem Werkzeug (2) gemessen wird, wobei in Abhängigkeit des gemessenen Drucks (p₁) mindestens ein Ventil (4, 5) von der Steuerungs- oder Regelungseinrichtung (6) betätigt wird, so dass sich ein vorgegebener Druck (p₁) einstellt.

3. Verfahren nach Anspruch 1 oder 2, **dadurch gekennzeichnet, dass** der Formluft-Tank (3) über eine Speiseleitung (7) mit Druckluft versorgt wird, wobei die Speiseleitung (7) vorzugsweise Bestandteil einer Druckluftversorgungsanlage für ein Gebäude oder Gebäudeteil ist.

4. Verfahren nach Anspruch 3, **dadurch gekennzeichnet, dass** im Bereich der Speiseleitung (7) und vor dem Formluft-Tank (3) ein Druckminderer (8) angeordnet ist, mit dem der Druck (p₀) im Formluft-Tank (3) auf einem definierten Wert gehalten wird.

5. Verfahren nach einem der Ansprüche 1 bis 4, **dadurch gekennzeichnet, dass** der Druck der Formluft (p₁) im Werkzeug (2) stets auf einem Niveau gehalten wird, das maximal 75 % des Drucks (p₀) im Formluft-Tank (3), vorzugsweise maximal 67 % des Drucks (p₀) im Formluft-Tank (3), beträgt.

6. Thermoformmaschine (1) zum Formen von Artikeln aus Kunststoff, wobei diese ein mindestens zweiteiliges Werkzeug (2) sowie einen Formluft-Tank (3) umfasst, in dem Formluft unter einem Druck (p₀) gehalten wird, zur Durchführung des Verfahrens nach einem der Ansprüche 1 bis 5,
**dadurch gekennzeichnet, dass** in einer Gasleitung (9', 9") zwischen dem Formluft-Tank (3) und dem Werkzeug (2) mindestens ein Ventil (4, 5) angeordnet ist, wobei das mindestens eine Ventil (4, 5) drei unterschiedliche Modi erlaubt, nämlich
- zum Befüllen des Werkzeugs (2) mit Formluft aus dem Formluft-Tank (3) die Herstellung einer fluidischen Verbindung zwischen dem Formluft-Tank (3) und dem Werkzeug (2);
- zum Halten des Drucks der Formluft im Werkzeug (2) eine fluidische Unterbrechung der ins Werkzeug (2) führenden Gasleitung (9");
- zum Entlüften des Drucks der Formluft aus dem Werkzeug (2) die Herstellung einer fluidischen Verbindung der ins Werkzeug (2) führenden Gasleitung (9") zur Umgebung, wobei gleichzeitig die vom Formluft-Tank (3) kommende Gasleitung (9') fluidisch unterbrochen ist, wobei zwei Ventile (4, 5) vorhanden sind, wobei das erste Ventil (4) in der Gasleitung (9', 9") angeordnet ist, die sich zwischen dem Formluft-Tank (3) und dem Werkzeug (2) erstreckt, und wobei ein zweites Ventil (5) zwischen einer vom ersten Ventil (4) kommenden Gasleitung (10) und der Umgebung (U) angeordnet ist.

7. Thermoformmaschine nach Anspruch 6, **dadurch gekennzeichnet, dass** mindestens eines der Ventile (4, 5) ein 3/2-Wege-Ventil oder ein 5/3-WegeVentil ist.

8. Thermoformmaschine nach Anspruch 6, **dadurch gekennzeichnet, dass** mindestens eines der Ventile (4, 5) ein Proportionalventil ist.

9. Thermoformmaschine nach einem der Ansprüche 6 bis 8, **dadurch gekennzeichnet, dass** im Werkzeug (2) mindestens ein mechanischer Vorstrecker (11) angeordnet ist.

## Claims

1. A method for operating a thermoforming machine (1) for forming items from plastic, the thermoforming machine (1) comprising an at least two-part mould (2) and at least one moulding air tank (3), in which moulding air is maintained at a pressure (p₀), moulding air being introduced into the mould (2) in an open-loop controlled or closed-loop controlled manner from the moulding air tank (3) to shape the items,
**characterized in that**
the moulding air is introduced into the mould (2) such that the pressure of the moulding air (p₁) in the mould (2) is less than the pressure (p₀) in the moulding air tank (3), wherein at least one valve (4, 5) and a pressure sensor (12) connected to an open-loop or closed-loop control device (6) are arranged in a gas line (9', 9") between the moulding air tank (3) and the mould (2), wherein the at least one valve (4, 5) controlled by the open-loop or closed-loop control device (6) allows three different modes, namely
- for filling the mould (2) with moulding air from the moulding air tank (3), the production of a fluidic connection between the moulding air tank (3) and the mould (2);
- for maintaining the pressure of the moulding air in the mould (2), a fluidic interruption of the gas line (9") leading into the mould (2);
- for venting the pressure of the moulding air from the mould (2), the production of a fluidic connection of the gas line (9") leading into the mould (2) to the surroundings, wherein the gas line (9') coming from the moulding air tank (3) is fluidically interrupted at the same time.

2. The method according to Claim 1, **characterized in that** the pressure of the moulding air (p₁) in the mould (2) or upstream of the mould (2) is measured, wherein at least one valve (4, 5) is actuated by the open-loop control or closed-loop control device (6) as a function of the measured pressure (p₁), so that a predetermined pressure (p₁) is set.

3. The method according to Claim 1 or 2, **characterized in that** the moulding air tank (3) is supplied with compressed air by means of a feed line (7), wherein the feed line (7) is preferably a constituent of a compressed-air supply system for a building or part of a building.

4. The method according to Claim 3, **characterized in that** a pressure reducer (8) is arranged in the region of the feed line (7) and upstream of the moulding air tank (3), using which the pressure (p₀) in the moulding air tank (3) is maintained at a defined value.

5. The method according to one of Claims 1 to 4, **characterized in that** the pressure of the moulding air (p₁) in the mould (2) is always maintained at a level which is at most 75% of the pressure (p₀) in the moulding air tank (3), preferably at most 67% of the pressure (p₀) in the moulding air tank (3).

6. A thermoforming machine (1) for forming items from plastic, this thermoforming machine comprising an at least two-part mould (2) and a moulding air tank (3), in which moulding air is kept at a pressure (p₀), for carrying out the method according to one of Claims 1 to 5,
**characterized in that**
at least one valve (4, 5) is arranged in a gas line (9', 9") between the moulding air tank (3) and the mould (2), wherein the at least one valve (4, 5) allows three different modes, namely
- for filling the mould (2) with moulding air from the moulding air tank (3), the production of a fluidic connection between the moulding air tank (3) and the mould (2);
- for maintaining the pressure of the moulding air in the mould (2), a fluidic interruption of the gas line (9") leading into the mould (2);
- for venting the pressure of the moulding air from the mould (2), the production of a fluid connection of the gas line (9") leading into the mould (2) to the surroundings, wherein the gas line (9') coming from the moulding air tank (3) is fluidically interrupted at the same time, wherein two valves (4, 5) are present, wherein the first valve (4) is arranged in the gas line (9', 9") which extends between the moulding air tank (3) and the mould (2), and wherein a second valve (5) is arranged between a gas line (10) coming from the first valve (4) and the surroundings (U).

7. The thermoforming machine according to Claim 6, **characterized in that** at least one of the valves (4, 5) is a 3/2-way valve or a 5/3-way valve.

8. The thermoforming machine according to Claim 6, **characterized in that** at least one of the valves (4, 5) is a proportional valve.

9. The thermoforming machine according to one of Claims 6 to 8, **characterized in that** at least one mechanical pre-stretching device (11) is arranged in the mould (2).

## Revendications

1. Procédé, destiné à faire fonctionner une machine de thermoformage (1) pour le façonnage d'articles en matière plastique, la machine de thermoformage (1) comprenant un outil (2) conçu au moins en deux parties, ainsi qu'au moins un réservoir d'air de formage (3), dans lequel de l'air de formage est maintenue sous un pression (p₀), pour démouler les articles, de l'air de formage étant introduit dans l'outil à partir du réservoir d'air de formage (3) de manière contrôlée ou réglée, **caractérisé en ce que** l'air de formage est introduit dans l'outil (2) de telle sorte, que la pression de l'air de formage (P₁) dans l'outil (2) soit inférieure à la pression (P₀) dans le réservoir d'air de formage (3), dans un conduit de gaz (9', 9") entre le réservoir d'air de formage (3) et l'outil (2) étant placés au moins une soupape (4, 5) et un capteur de pression (12) relié avec un système de commande ou de réglage (6), l'au moins une soupape (4, 5) commandée par le système de commande ou de réglage (6) admettant trois différents modes, à savoir
- pour le remplissage de l'outil (2) avec de l'air de formage provenant du réservoir d'air de formage (3), la création d'une liaison fluidique entre le réservoir d'air de formage (3) et l'outil (2) ;
- pour maintenir la pression de l'air de formage dans l'outil (2), une interruption fluidique du conduit de gaz (9") menant vers l'outil (2) ;
- pour la purge de la pression de l'air de formage hors de l'outil (2), la création d'une liaison fluidique entre le conduit de gaz (9") menant vers l'outil (2) et l'environnement, le conduit de gaz (9') qui arrive du réservoir d'air de formage (3) étant simultanément interrompu.

2. Procédé selon la revendication 1, **caractérisé en ce que** la pression de l'air de formage (p₁) dans l'outil (2) ou à partir de l'outil (2) est mesurée, en fonction de la pression (P₁) mesurée, au moins une soupape (4, 5) étant actionnée par le système de commande ou de réglage (6), de sorte qu'il s'établisse une pression (p₁) prédéfinie.

3. Procédé selon la revendication 1 ou 2, **caractérisé en ce que** le réservoir d'air de formage (3) est alimenté en air comprimé par l'intermédiaire d'un conduit d'alimentation (7), le conduit d'alimentation (7) étant de préférence une partie intégrante d'une installation d'alimentation d'air comprimé pour un bâtiment ou une partie de bâtiment.

4. Procédé selon la revendication 3, **caractérisé en ce que** dans la région du conduit d'alimentation (7) et en amont du réservoir d'air de formage (3) est placé est réducteur de pression (8) à l'aide duquel la pression (p₀) dans le réservoir d'air de formage (3) est maintenue à une valeur définie.

5. Procédé selon l'une quelconque des revendications 1 à 4, **caractérisé en ce que** la pression de l'air de formage (p₁) dans l'outil (2) est toujours maintenue à un niveau qui s'élève au maximum à 75 % de la pression (P₀) dans le réservoir d'air de formage (3), de préférence au maximum à 67 % de la pression (P₀) dans le réservoir d'air de formage (3).

6. Machine de thermoformage (1), destinée au façonnage d'articles en matière plastique, celle-ci comprenant un outil (2) conçu en au moins deux parties, ainsi qu'un réservoir d'air de formage (3) dans lequel l'air de formage est maintenu sous une pression (p₀), pour réaliser le procédé selon l'une quelconque des revendications 1 à 5, **caractérisé en ce que** dans un conduit de gaz (9', 9") entre le réservoir d'air de formage (3) et l'outil (2) est placée au moins un soupape (4, 5), l'au moins une soupape (4, 5) admettant trois différents modes, à savoir
- pour le remplissage de l'outil (2) avec de l'air de formage provenant du réservoir d'air de formage (3), la création d'une liaison fluidique entre le réservoir d'air de formage (3) et l'outil (2) ;
- pour maintenir la pression de l'air de formage dans l'outil (2), une interruption fluidique du conduit de gaz (9") menant vers l'outil (2) ;
- pour la purge de la pression de l'air de formage hors de l'outil (2), la création d'une liaison fluidique entre le conduit de gaz (9") menant vers l'outil (2) et l'environnement, le conduit de gaz (9') arrivant du réservoir d'air de formage (3) étant simultanément interrompu, deux soupapes (4, 5) étant présentes, la première soupape (4) étant placée dans le conduit de gaz (9', 9") qui s'étend entre le réservoir d'air de formage (3) et l'outil (2) et une deuxième soupape (5) étant placée entre un conduit de gaz (10) arrivant de la première soupape (4) et l'environnement (U).

7. Machine de thermoformage selon la revendication 6, **caractérisée en ce qu'**au moins l'une des soupapes (4, 5) est une soupape à 3/2 voies ou une soupape à 5/3 voies.

8. Machine de thermoformage selon la revendication 6, **caractérisée en ce qu'**au moins l'une des soupapes (4, 5) est une soupape proportionnelle.

9. Machine de thermoformage selon l'une quelconque des revendications 6 à 8, **caractérisée** en ce dans l'outil (2) est placé au moins un étireur (11) mécanique.
